# EUROPÄISCHE PATENTANMELDUNG

(11) **EP 4 741 709 A1**
(43) Veröffentlichungstag der Anmeldung: **13.05.2026**
(21) Anmeldenummer: 25150066.6
(22) Anmeldetag: 02.01.2025
(51) Int. Cl.: F21V 14/06, F21V 9/40, F21W 131/406, F21V 5/00

(54) **SCHEINWERFER**

(30) Priorität: 12.11.2024 DE 202024106523 U
(71) Anmelder: ROXX GmbH, 51149 Köln (DE)
(72) Erfinder: VAN DE GROOTE POORT, Daniel Garcia, 50169 Kerpen (DE)
(74) Vertreter: Alpspitz IP

(57) **Zusammenfassung**

Ein Scheinwerfer (1) enthält ein Gehäuse (11), wobei das Gehäuse (11) einen Hohlraum (12) und eine Lichtaustrittsseite (13) des Scheinwerfers (1) definiert; ein in dem Hohlraum (12) des Gehäuses (11) vorgesehenes Leuchtmittel (5); eine in dem Hohlraum (12) des Gehäuses (11) vorgesehene Zoom-Optik (7); und ein an dem Gehäuse (11) an der Lichtaustrittsseite (13) angeordnetes Filter (8), wobei das Filter (8) eine tönbare Verglasung (Smart Glass) aufweist, deren Lichtdurchlässigkeit durch das Anlegen einer elektrischen Spannung veränderbar ist.

## Beschreibung

### Gebiet der Erfindung

Die Erfindung betrifft einen Scheinwerfer für die professionelle Beleuchtungstechnik, z.B. für Veranstaltungsbeleuchtung.

### Stand der Technik

Scheinwerfer für die Veranstaltungstechnik, beispielsweise PAR (Parabolic Aluminized Reflector), Fluter, Fresnel- oder Profilscheinwerfer und Stroboskope sind bekannt. Ferner ist es bekannt, an solchen Scheinwerfern Elemente zum Erzeugen von optischen Effekten fest verbaut oder lösbar vom Scheinwerfer anzubringen. Solche Elemente zum Erzeugen von optischen Effekten sind z.B., wie in der DE 20 2024 104 851 U1 offenbart, Filter, die eine tönbare bzw. gefrostete Verglasung aufweisen, deren Lichtdurchlässigkeit durch das Anlegen einer elektrischen Spannung veränderbar ist. Solche sogenannten Smart Glass Filter sind durch Anlegen der elektrischen Spannung stufenlos lichtdurchlässig oder undurchsichtig einstellbar und/oder sie sind stufenlos gefärbt.

Wenngleich durch solche Elemente zum Erzeugen von optischen Effekten verschiedene Beleuchtungseffekte geschaffen werden können, so ist die Flexibilität beim Erzeugen der Beleuchtungseffekte doch begrenzt, da während des Betriebs nur Veränderungen der Effekte durch das Anlegen von Spannung oder nicht erzielt werden können. Alternativ muss, was mühsam ist, der Filter während des Betriebs gegen eine andere Art von Filter oder optischem Element ausgetauscht werden.

### Aufgabe der Erfindung

Davon ausgehend ist es eine Aufgabe der Erfindung, einen Scheinwerfer vorzusehen, mit welchem die Effektwirkungen von einem Smart Glass Filter an einem Scheinwerfer vielfältig ausgenutzt werden können und eine größere Variabilität der Beleuchtungseffekte ohne Austausch der Filter während des Betriebs erreicht werden kann.

### Darstellung der Erfindung

Diese Aufgabe wird mit einem Scheinwerfer mit den Merkmalen des Anspruchs 1 gelöst. Bevorzugte Ausführungsformen sind in den abhängigen Ansprüchen angegeben.

Der Erfindung liegt der Gedanke zugrunde ein optisches Filter, das aus einer tönbaren Verglasung, einem sogenannten Smart Glass gebildet ist, mit einer Zoom-Optik eines Scheinwerfers zu kombinieren, so dass durch die stufenlose Verstellbarkeit des Smart Glasses in Kombination mit der stufenlosen Verstellbarkeit der Zoom-Optik eine Vielzahl von Effekten mit dem vom Scheinwerfer abgestrahlten Licht erzielt werden können und die Kombinationsmöglichkeiten und damit Effekte im Vergleich zu herkömmlichen Scheinwerfern vervielfacht sind. Dadurch, dass sowohl die Zoom-Optik während des Betriebs des Scheinwerfers verstellbar ist, als auch das Smart Glass während des Betriebs verstellbar ist, können diese Effekte jederzeit flexibel eingesetzt und erzielt werden, ohne dass Filterelemente oder andere optische Elemente getauscht werden müssen.

Das Smart Glass Filter ist lösbar oder fest montiert am Scheinwerfer angebracht. Wenn das Filter bevorzugterweise lösbar am Scheinwerfer angebracht ist, können nach Bedarf das Smart Glass Filter gegen ein anderes Filter oder ein anderes Smart Glass Filter oder gegen ein anderes optisches Element ausgetauscht werden, was noch mehr Flexibilität für die mit dem Scheinwerfer erzielbaren Beleuchtungseffekte vorsieht und damit den Einsatz des Scheinwerfers vorsieht.

Eine bevorzugte Ausführungsform für das lösbare Anbringen eines Smart Glass Filters an einem Scheinwerfer ist in der DE 20 2024 104 851 U1 beschrieben, deren diesbezügliche Lehren hier durch Bezugnahme eingeschlossen sind.

Insbesondere sind bei einem lösbaren Filter, um die korrekt ausgerichtete Montage des Filters zu gewährleisten, vorzugsweise mindestens vier Kontakte auf einem Rahmen des Filters vorgesehen, an dem die tönbare Verglasung fixiert ist. Über mindestens zwei von diesen Kontakten wird eine elektrische Spannung zur Veränderung der Lichtdurchlässigkeit der tönbaren Verglasung angelegt, und über mindestens zwei andere Kontakte wird gewährleistet, dass die Montage des Filters an dem Scheinwerfer, der mit entsprechenden Kontakten versehen ist, korrekt ist. Die Kontakte können nebeneinander in Reihe angeordnet, alternativ jedoch mindestens zwei der mindestens vier Kontakte paarweise nebeneinander in Reihe angeordnet sein.

Nach einer bevorzugten Ausführungsform enthält die Zoom-Optik mindestens ein in seiner Position und/oder Lage verstellbares optisches Element. Das mindestens eine optische Element ist zwischen den Leuchtmitteln des Scheinwerfers und der Lichtaustrittsseite bzw. -fläche des Scheinwerfers angeordnet. Nach einer weiter bevorzugten Ausführungsform ist das mindestens eine optische Element translatorisch in einer Richtung, die im Wesentlichen senkrecht zur Lichtaustrittsseite bzw. -fläche des Scheinwerfers ist, verschiebbar, so dass es näher und weiter entfernt von den Leuchtmitteln und der Lichtaustrittsseite angeordnet werden kann. Damit können stufenlos verstellbare Beleuchtungseffekte erzielt werden.

Beispielsweise kann das optische Element eine oder mehrere Linsen enthalten.

Die Verstellung des mindestens einen optischen Elements kann beispielsweise über einen Verstellmotor erfolgen, der das optische Element beispielsweise translatorisch verschiebt. Alternativ wäre auch denkbar, das optische Element zu drehen oder zu kippen. Mit Hilfe eines Verstellmotors kann eine einfache uns zuverlässige Bewegung und Verstellung des optischen Elements erzielt werden.

Bevorzugterweise enthält die Zoom-Optik mehrere optische Elemente, beispielsweise jeweils einzelnen Leuchtmitteln des Scheinwerfers zugeordnete optische Elemente, so dass Licht, das aus einem oder einer Gruppe von Leuchtmitteln austritt, durch eines der optischen Elemente in Richtung Lichtaustrittsseite des Scheinwerfers gelangt.

Sind mehrere optische Elemente vorgesehen, so sind diese vorzugsweise auf einem gemeinsamen Träger angeordnet, so dass die optischen Elemente gemeinsam durch Verstellen des Trägers in ihrer Position und/oder Lage verstellbar sind. Damit ist nur ein gemeinsamer Verstellmotor für die gesamte Zoom-Optik erforderlich, was die Komplexität des Aufbaus reduziert.

Vorzugsweise ist jedem der optischen Elemente mindestens eine Lichtleitung als Leuchtmittel zugeordnet. Damit kann das von den Leuchtmitteln abgestrahlte Licht gebündelt in das optische Element geleitet werden.

Die Leuchtmittel können jede beliebige Art von Leuchtmitteln oder Kombinationen verschiedener Leuchtmittel sein, z.B. LEDs und/oder Lichtleitungen enthalten.

Zum Verringern der Komplexität sind die mehreren Leuchtmittel vorzugsweise auf einer gemeinsamen gedruckten Leiterplatte (PCB) angeordnet.

### Kurze Beschreibung der Figuren

Nachfolgend wird die Erfindung beispielhaft anhand bevorzugter Ausführungsformen unter Bezugnahme auf die beigefügten Figuren beschrieben. Es zeigen:
Figur 1 Schnittansicht eines Scheinwerfers mit einem Filter mit einer tönbaren Verglasung (Smart Glass) und einer Zoom-Optik gemäß einer Ausführungsform, wobei sich die Zoom-Optik in einer ersten Stellung befindet; und
Figur 2 eine Schnittansicht Scheinwerfers aus Figur 1, wobei sich die Zoom-Optik in einer zweiten Stellung befindet.

### Beschreibung bevorzugter Ausführungsformen

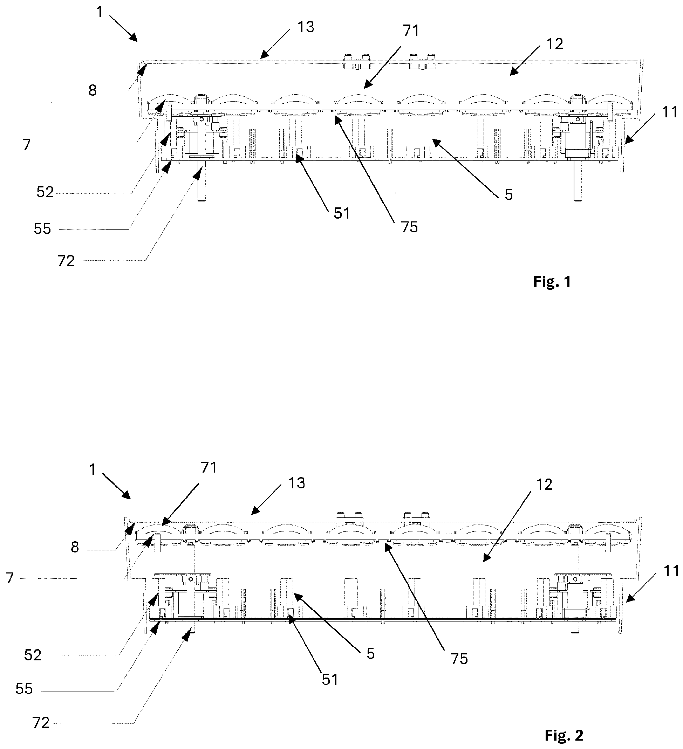

Figur 1 zeigt eine Schnittansicht eines Scheinwerfers 1. Der Scheinwerfer 1 enthält ein Gehäuse 11, das einen Hohlraum 12 definiert. Das Gehäuse 11 kann z.B. im Wesentlichen quaderförmig oder alternativ zylindrisch sein oder jede andere geeignete Form aufweisen.

In dem Hohlraum 12 des Gehäuses 11 des Scheinwerfers 1 sind Leuchtmittel 5 vorgesehen. Die Leuchtmittel 5 sind in der dargestellten Ausführungsform auf einer gedruckten Leiterplatte (printed circuit board) PCB 55 angeordnet. Es sind als Leuchtmittel 5 mehrere Gruppen aus LEDs 51 und Lichtleitungen 52 vorgesehen, die im Betrieb Licht in Richtung einer Lichtaustrittsseite 13 des Scheinwerfers 1 abstrahlen.

An der Lichtaustrittsseite 13 des Scheinwerfers 1 ist ein Smart Glass Filter 8 vorgesehen. Das Smart Glass Filter 8 kann fest mit dem Gehäuse des Scheinwerfers 1 verbunden sein oder an diesem lösbar, und damit austauschbar gegen einen anderen Smart Glass Filter oder eine andere Art von optischem Element, angebracht sein. Die Lichtdurchlässigkeitseigenschaften des Smart Glasses, wie z.B., je nach Art des verwendeten Smart Glasses, Farbe, Transparenz, Frosting-Wirkung etc., lassen sich durch Anlegen einer elektrischen Spannung an das Smart Glass verändern und einstellen.

Ferner ist es möglich, zusätzliche optische Elemente, wie beispielsweise weitere Filter, an dem Scheinwerfer 1 vorzusehen.

Vor dem Austritt aus dem Hohlraum 12 des Scheinwerfers 1 und dem Durchtritt durch das Smart Glass Filter 8 durchdringt das von den Leuchtmitteln 5 abgestrahlte Licht eine ebenfalls im Hohlraum 12 des Scheinwerfers angeordnete Zoom-Optik 7. Die Zoom-Optik 7 weist mehrere Linsen 71 auf, die auf bzw. an einem gemeinsamen Träger 75 angeordnet sind. Es kann eine Linse oder es können mehrere Linsen ggf. auch integral geformt, d.h. aus einem einzigen Stück Material, vorgesehen sein. Da die Linsen 71 in der dargestellten Ausführungsform auf einem gemeinsamen Träger 75 angeordnet sind, können sie über einen gemeinsamen Verstellmotor 72 mit einer entsprechenden Verstellmechanik gemeinsam bewegt werden.

In der in Fig. 1 und Fig. 2 dargestellten Ausführungsform ist der Träger 75 translatorisch, d.h. im Wesentlichen entlang der Lichtaustrittsrichtung aus dem Scheinwerfer 1, verschiebbar durch Betätigung des Verstellmotors 72. In der dargestellten Ausführungsform kann der Träger 75 und mit ihm die daran angebrachten Linsen 71 von einer der gedruckten Leiterplatte 55 bzw. Platine und damit den Leuchtmitteln 5 nahen Position (die in Fig. 1 gezeigt ist) in eine in Fig. 2 gezeigte der gedruckten Leiterplatte 55 bzw. Platine und damit den Leuchtmitteln 5 ferne Position, in der die Linsen 71 dem Smart Glass Filter 8 nahe sind, verschoben werden.

Durch die Unterschiedliche Position der Linsen 71 zur den Leuchtmitteln können, bei einer bestimmten Lichtdurchlässigkeitseigenschaft des Smart Glass Filters 8 bereits vielfältige Beleuchtungseffekte erzielt werden. Da jedoch zusätzlich noch durch Anlegen von Spannung an das Smart Glass Filter 8 dessen Lichtdurchlässigkeitseigenschaften verändert werden können, ergibt sich eine noch größere Vielfalt und Flexibilität bei der Einstellung von Beleuchtungseffekten.

### Bezugszeichenliste

- 1: Scheinwerfer
- 11: Gehäuse
- 12: Hohlraum
- 13: Lichtaustrittsseite
- 5: Leuchtmittel
- 51: LED
- 52: Lichtleitung
- 55: gedruckte Leiterplatte (PCB)
- 7: Zoom Optik
- 71: optisches Element (Linse)
- 72: Verstellmotor
- 75: Träger
- 8: Filter (Smart Glass)

## Patentansprüche

1. Scheinwerfer (1) mit
einem Gehäuse (11), wobei das Gehäuse (11) einen Hohlraum (12) und eine Lichtaustrittsseite (13) des Scheinwerfers (1) definiert;
einem in dem Hohlraum (12) des Gehäuses (11) vorgesehenen Leuchtmittel (5);
einer in dem Hohlraum (12) des Gehäuses (11) vorgesehenen Zoom-Optik (7); und
einem an dem Gehäuse (11) an der Lichtaustrittsseite (13) angeordnetes Filter (8), wobei das Filter (8) eine tönbare Verglasung (Smart Glass) aufweist, deren Lichtdurchlässigkeit durch das Anlegen einer elektrischen Spannung veränderbar ist.

2. Scheinwerfer (1) nach Anspruch 1, wobei die Zoom-Optik (7) mindestens ein in seiner Position und/oder Lage verstellbares optisches Element (71) enthält.

3. Scheinwerfer (1) nach Anspruch 2, wobei das optische Element (71) eine Linse enthält.

4. Scheinwerfer (1) nach Anspruch 2 oder 3, wobei die Zoom-Optik (7) einen Verstellmotor (72) enthält, der angepasst ist, eine Positions- und/oder Lageänderung des optischen Elements (71) zu bewirken.

5. Scheinwerfer (1) nach einem der Ansprüche 2 bis 4, wobei das optische Element (71) in einer Richtung senkrecht zur Lichtaustrittsseite (13) des Scheinwerfers (1) verschiebbar ist.

6. Scheinwerfer (1) nach einem der Ansprüche 2 bis 5, wobei die Zoom-Optik (7) mehrere optische Elemente (71) enthält.

7. Scheinwerfer (1) nach Anspruch 6, wobei die mehreren optischen Elemente (71) auf einem gemeinsamen Träger (75) angeordnet sind und gemeinsam durch Verstellen des Trägers (75) in ihrer Position und/oder Lage verstellbar sind.

8. Scheinwerfer (1) nach Anspruch 6 oder 7, wobei jedem der optischen Elemente (71) mindestens eine Lichtleitung (52) als Leuchtmittel (5) zugeordnet ist.

9. Scheinwerfer (1) nach einem der vorhergehenden Ansprüche, wobei das Leuchtmittel (5) LEDs (51) und/oder Lichtleitungen (52) enthält.

10. Scheinwerfer (1) nach Anspruch 9, wobei mehrere Leuchtmittel (5) vorgesehen sind, die auf einer gemeinsamen gedruckten Leiterplatte (PCB) (55) angeordnet sind.

11. Scheinwerfer (1) nach einem der vorhergehenden Ansprüche, wobei das Filter (8) vom Gehäuse (11) abnehmbar ist.

## Geänderte Patentansprüche

### Geänderte Patentansprüche gemäss Regel 137(2) EPÜ.

1. Scheinwerfer (1) mit
einem Gehäuse (11), wobei das Gehäuse (11) einen Hohlraum (12) und eine Lichtaustrittsseite (13) des Scheinwerfers (1) definiert;
einem in dem Hohlraum (12) des Gehäuses (11) vorgesehenen Leuchtmittel (5); und
einer in dem Hohlraum (12) des Gehäuses (11) vorgesehenen Zoom-Optik (7);
**dadurch gekennzeichnet, dass** an dem Gehäuse (11) an der Lichtaustrittsseite (13) ein Filter (8) angeordnet ist, wobei das Filter (8) eine tönbare Verglasung (Smart Glass) aufweist, deren Lichtdurchlässigkeit durch das Anlegen einer elektrischen Spannung veränderbar ist.

2. Scheinwerfer (1) nach Anspruch **1,** wobei die Zoom-Optik (7) mindestens ein in seiner Position und/oder Lage verstellbares optisches Element (71) enthält.

3. Scheinwerfer (1) nach Anspruch 2, wobei das optische Element (71) eine Linse enthält.

4. Scheinwerfer (1) nach Anspruch 2 oder 3, wobei die Zoom-Optik (7) einen Verstellmotor (72) enthält, der angepasst ist, eine Positions- und/oder Lageänderung des optischen Elements (71) zu bewirken.

5. Scheinwerfer (1) nach einem der Ansprüche 2 bis 4, wobei das optische Element (71) in einer Richtung senkrecht zur Lichtaustrittsseite (13) des Scheinwerfers (1) verschiebbar ist.

6. Scheinwerfer (1) nach einem der Ansprüche 2 bis 5, wobei die Zoom-Optik (7) mehrere optische Elemente (71) enthält.

7. Scheinwerfer (1) nach Anspruch 6, wobei die mehreren optischen Elemente (71) auf einem gemeinsamen Träger (75) angeordnet sind und gemeinsam durch Verstellen des Trägers (75) in ihrer Position und/oder Lage verstellbar sind.

8. Scheinwerfer (1) nach Anspruch 6 oder 7, wobei jedem der optischen Elemente (71) mindestens eine Lichtleitung (52) als Leuchtmittel (5) zugeordnet ist.

9. Scheinwerfer (1) nach einem der vorhergehenden Ansprüche, wobei das Leuchtmittel (5) LEDs (51) und/oder Lichtleitungen (52) enthält.

10. Scheinwerfer (1) nach Anspruch 9, wobei mehrere Leuchtmittel (5) vorgesehen sind, die auf einer gemeinsamen gedruckten Leiterplatte (PCB) (55) angeordnet sind.

11. Scheinwerfer (1) nach einem der vorhergehenden Ansprüche, wobei das Filter (8) vom Gehäuse (11) abnehmbar ist.
